# EUROPÄISCHE PATENTSCHRIFT

(11) **EP 4 490 502 B1**
(45) Veröffentlichungstag und Bekanntmachung des Hinweises auf die Patenterteilung: **25.06.2025**
(21) Anmeldenummer: 23782852.0
(22) Anmeldetag: 27.09.2023
(51) Int. Cl.: G01N 29/06, G01N 29/265, G01N 29/28, G01N 29/22

(54) **TRANSDUCERAUFSETZKÖRPER FÜR EINEN WENIGSTENS EINEN TRANSDUCER UND EINE LINSE AUFWEISENDEN PRÜFKOPF EINES AKUSTISCHEN MIKROSKOPS, INSBESONDERE ULTRASCHALLRASTERMIKROSKOP, SOWIE AKUSTISCHES MIKROSKOP, INSBESONDERE ULTRASCHALLRASTERMIKROSKOP**
TRANSDUCER ATTACHMENT BODY FOR A PROBE, HAVING AT LEAST ONE TRANSDUCER AND A LENS, OF AN ACOUSTIC MICROSCOPE, IN PARTICULAR AN ULTRASOUND SCANNING MICROSCOPE, AND ACOUSTIC MICROSCOPE, IN PARTICULAR ULTRASOUND SCANNING MICROSCOPE
CORPS DE FIXATION DE TRANSDUCTEUR POUR UNE SONDE, COMPRENANT AU MOINS UN TRANSDUCTEUR ET UNE LENTILLE, D'UN MICROSCOPE ACOUSTIQUE, EN PARTICULIER D'UN MICROSCOPE À BALAYAGE À ULTRASONS, ET MICROSCOPE ACOUSTIQUE, EN PARTICULIER MICROSCOPE À BALAYAGE À ULTRASONS

(30) Priorität: 04.10.2022 DE 102022125468
(43) Veröffentlichungstag der Anmeldung: 15.01.2025
(73) Patentinhaber: PVA TePla Analytical Systems GmbH, 73463 Westhausen (DE)
(72) Erfinder: HOFFROGGE, Peter, 73447 Oberkochen (DE); JOAS, Markus, 73466 Lauchheim (DE); LOWACK, Mario, 86476 Neuburg an der Kammel (DE); SCHUHMACHER, Silvia, 73430 Aalen (DE); MERKEL, Markus, 73460 Hüttlingen (DE)
(74) Vertreter: Seemann & Partner Patentanwälte mbB
(86) Internationale Anmeldenummer: PCT/EP2023/076775
(87) Internationale Veröffentlichungsnummer: WO 2024/074380

(56) Entgegenhaltungen:
- DE-A1- 102008 030 688
- GB-A- 2 110 052
- JP-A- 2000 035 419
- US-A- 4 435 985
- US-A1- 2007 012 115
- US-A1- 2017 205 381
- US-B2- 8 720 273

## Beschreibung

Die Erfindung betrifft einen Transduceraufsetzkörper für einen wenigstens einen Transducer und eine Linse aufweisenden Prüfkopf eines akustischen Mikroskops, insbesondere Ultraschallrastermikroskops, sowie ein akustisches Mikroskop, insbesondere Ultraschallrastermikroskop. Außerdem betrifft die Erfindung eine Verwendung oder Anordnung eines Transduceraufsetzkörpers und ein Verfahren zum Betreiben eines akustischen Mikroskops, insbesondere Ultraschallrastermikroskops.

Ultraschallmikroskope bzw. akustische Mikroskope, die auch als akustische Rastermikroskope (Scanning Acoustic Microscope (SAM)) bezeichnet werden, werden eingesetzt, um in einem Rasterverfahren Proben mittels Ultraschall abzurastern und die reflektierten Schallwellen zu verarbeiten, um daraus Bilder von Strukturen der Probe zu erzeugen.

Hierbei verfügen die Ultraschallmikroskope über einen Ultraschallkopf, der auch als Prüfkopf bzw. Transducerkopf bezeichnet wird. Der Ultraschallkopf besteht daher aus einer akustischen Linse und einen daran angeschlossenen Schallwandler (Transducer).

Bei der Untersuchung in der akustischen Mikroskopie wird als Koppelmedium zwischen dem akustischen Transducer und der zu untersuchenden Probe Wasser verwendet, um eine gute Übertragung von den vom Transducer ausgesendeten Schallwellen zur Probe zu erreichen. Hierfür ist ein Koppelmedium mit guten Eigenschaften bei der Schallleitung erforderlich.

Bei der Ultraschallmikroskopie, die im Frequenzbereich von 1 MHz bis 5 GHz arbeitet, ist es üblich, dass die Proben in einem Wasserbecken untergetaucht werden und auf einer Probenhalterung platziert werden, wobei die Untersuchung der Probe mittels Ultraschallmikroskops in Immersion geführt wird. Bei einem anderen Verfahren wird ein Wasserstrahl verwendet, der zwischen dem Schallwandler und der Probe ausgebildet wird, um eine gute Schalleinkopplung in die Probe zu gewährleisten.

In US 2017/0205381 A1 ist eine Prüfvorrichtung zum Prüfen einer Struktur offenbart. Die Prüfvorrichtung weist ein Gehäuse mit einem ersten Ende und einem zweiten Ende auf, wobei einen Wandler nahe dem zweiten Ende angeordnet ist und ausgerichtet ist, um zumindest Ultraschallsignale durch einen flexiblen Düsenabschnitt mit mindestens einer Öffnung zu emittieren und/oder zu empfangen. Ferner ist ein Fluidkanal vorgesehen, der konfiguriert ist, um ein Fluid in eine vordere Kammer des Gehäuses nahe zumindest eines von einem signalemittierenden Abschnitt oder einem signalempfangenden Abschnitt des Wandlers zuzuführen, um von der Öffnung des Düsenabschnitts zu strömen.

US 4,435,985 offenbart ferner eine akustische Kopplungsvorrichtung zur Verwendung in einem akustischen Rastermikroskop bestehend aus einer akustischen Linse mit einer konkaven Fokussierungsfläche und einem akustischen Koppler mit einer konvexen Fläche, auf die normalerweise ein konvergierender Strahl akustischer Strahlung auftrifft.

Außerdem offenbart US 2007/0012115 A1 u.a. eine Vorrichtung zur Kopplung von Ultraschall zwischen einem Ultraschallwandler und einem Objekt. Ein Abtastelement wird an einem Ultraschallwandler angebracht, um eine integrale Wandlerbaugruppe zu bilden, bei der eine Ultraschall emittierende Oberfläche des Ultraschallwandlers in einem Fluidhohlraum einer oberen Kammer positioniert ist. Durch die Einstellung einer unteren Wand der oberen Kammer in unmittelbarer Nähe des zu scannenden Objekts bildet sich ein dünner Film aus Kopplungsflüssigkeit zwischen einem ebenen Bereich der unteren Wand und der oberen Oberfläche des Objekts.

Eine Aufgabe der Erfindung besteht darin, bei der akustischen Mikroskopie es zu ermöglichen, dass eine zu untersuchende Probe nur lokal und so kurz wie möglich mit einem Koppelmedium in Kontakt gebracht wird, wobei insbesondere ein stabiles und vorzugsweise blasenfreies lokales Koppelmediumskissen, insbesondere Wasserkissen, zwischen dem Schallwandler und der Probe bereitgestellt werden soll. Eine weitere Aufgabe besteht darin, für die akustische Mikroskopie auf einfache Weise bestehende akustische Rastermikroskope nachzurüsten.

Die Aufgabe wird gelöst durch einen Transduceraufsetzkörper, insbesondere Transducerkopfaufsetzkörper, für einen wenigstens einen Transducer und eine Linse aufweisenden Prüfkopf eines akustischen Mikroskops, insbesondere Ultraschallrastermikroskop, mit einem Aufnahmeraum zum Aufnehmen des Prüfkopfs, wobei eine Zuführleitung zum Zuführen eines flüssigen Koppelmediums, insbesondere Wasser, fluidisch mit dem Aufnahmeraum verbunden ist, wobei der Aufnahmeraum eine zu einer zu untersuchenden Probe zugewandte, insbesondere kreisförmige, Austrittsöffnung zum Austritt des flüssigen Koppelmediums aus dem Aufnahmeraum aufweist, der dadurch weitergebildet ist, dass außerhalb des Aufnahmeraums und seitlich an der Austrittsöffnung des Aufnahmeraums eine mit Unterdruck beaufschlagte oder beaufschlagbare Absaugkammer zum Absaugen des aus der Austrittsöffnung austretenden Koppelmediums vorgesehen ist.

Die Erfindung beruht auf den Gedanken, dass durch die Bereitstellung des Transduceraufsetzkörpers für einen Prüfkopf bei einem akustischen Mikroskop, insbesondere Ultraschallrastermikroskop, ein lokales Wasserkissen zwischen der Austrittsöffnung des Aufnahmeraums und einer Oberfläche einer zu untersuchenden Probe bereitgestellt wird, wobei durch das lokale Wasserkissen mit Wasser als Koppelmedium zwischen dem Transduceraufsetzkörper, insbesondere außerhalb der Austrittsöffnung, und der Oberfläche der Probe für den Transducer eine gute Ankopplung des Ultraschalls ermöglicht wird. Dabei bleiben die umliegenden Bereiche außerhalb des Kissens des Koppelmediums trocken bzw. sind nach einer Abrasterung wieder getrocknet. Vorzugsweise werden bei einem Betrieb eines akustischen Mikroskops die Proben reibungsfrei und berührungslos mit einer Geschwindigkeit von bis zu 2 m/s und einer maximalen Beschleunigung von 50 m/s² beispielsweise abgetastet.

Gemäß der Erfindung wird mittels des Transduceraufsetzkörpers durch den Austritt des Koppelmediums aus der Austrittsöffnung des Aufnahmeraums ein innerer Bereich ausgebildet, bei dem ein lokales Kissen eines Koppelmediums zwischen dem Aufnahmeraum und der Oberfläche der Probe ausgebildet wird, wobei das überschüssige Koppelmedium im einem äußeren Bereich über die Absaugkammer durch die Verwendung eines Unterdrucks von der Oberfläche der Probe abgesaugt wird.

Bei der Verwendung des erfindungsgemäßen Transduceraufsetzkörpers bei einem akustischen Mikroskop wird die Untersuchung wasserempfindlicher Proben erleichtert, da nur ein Teil der Oberfläche der Probe zeitweise, d.h. temporär und lokal mit einem Koppelmedium benetzt ist, während die anderen, nicht untersuchten Bereiche der Probenoberfläche nicht benetzt und trocken sind. Durch die kurze Kontaktzeit des mittels des Transduceraufsetzkörpers bereitgestellten Koppelmediums mit der Probenoberfläche kann zum Beispiel eine Oxidation von metallischen Probenoberflächen verhindert werden. Vorzugsweise wird als Koppelmedium Wasser in Reinqualität verwendet.

Darüber hinaus besteht ein weiterer Vorteil des Transduceraufsetzkörpers darin, dass das damit ausgebildete akustische Mikroskop lageunabhängig betrieben werden kann. Das heißt, dass die Probe sowohl horizontal als auch vertikal orientiert sein kann bzw. eine horizontal ausgerichtete Probe sowohl an der Unterseite als auch an der Oberseite untersucht werden kann.

Durch die Ausbildung des Aufnahmeraums und der einer zu untersuchenden Probe zugewandten Austrittsöffnung wird ermöglicht, dass das Koppelmedium zwischen den Transduceraufsetzkörper und der Probe eingebracht wird oder ist, so dass ein Koppelmedium zwischen dem Transducer des Prüfkopfs und dem Bereich der zu untersuchenden Probe als eine Art Kissen und insbesondere außerhalb des Aufnahmeraums und/oder außerhalb der Austrittsöffnung ausgebildet wird oder ausbildbar ist. Durch die Verwendung und Ausbildung der seitlich an der Austrittsöffnung des Aufnahmeraums angeordnete Absaugkammer wird das vorhandene Koppelmedium außerhalb der Ultraschallzone durch Absaugen wieder entfernt, wodurch die Kontaktzeit zwischen dem Koppelmedium und der Oberfläche der zu untersuchenden Probe kurzgehalten wird.

Darüber hinaus besteht ein weiterer Vorteil der Erfindung darin, dass Prüfköpfe für bestehende akustische Mikroskope, insbesondere Ultraschallrastermikroskope, mittels des erfindungsgemäßen Transduceraufsetzkörpers leicht nachrüstbar sind, um die Anwendung bestehender akustischer Mikroskope zu verbessern.

Durch die Ausbildung der Absaugkammer an dem Transduceraufsetzkörper, der insbesondere als Transducerkopfaufsetzkörper oder als Prüfkopfaufsetzkörper ausgebildet ist, wird erreicht, dass das Koppelmedium zwischen dem Transduceraufsetzkörper, vorzugsweise außerhalb der Untersuchungszone des Transducers, absaugbar ist bzw. abgesaugt wird.

Die Austrittsöffnung des Aufnahmeraums ist bei Anordnung eines Prüfkopfs in dem Aufnahmeraum gegenüber der akustischen Linse des Prüfkopfs oder gegenüber dem distalen Ende des Prüfkopfs ausgebildet. Die Austrittsöffnung ist somit mittig oder zentral an der Austrittsseite des Aufnahmeraums ausgebildet. Vorzugsweise ist die Austrittsöffnung an der Unterseite oder an der Oberseite des Aufnahmeraums ausgebildet. Außerdem ist vorzugsweise die Fläche der, insbesondere kreisförmigen, Austrittsöffnung kleiner als der Querschnitt des Aufnahmeraums, wobei die Austrittsöffnung bei Austritt des Koppelmediums aus dem Aufnahmeraum eine Strömungsverengung ausgebildet ist.

Ferner zeichnet sich eine Weiterbildung des Transduceraufsetzkörpers dadurch aus, dass die Absaugkammer wenigstens teilringförmig oder ringförmig, vorzugsweise im Bereich der Austrittsseite des Aufnahmeraums, die Austrittsöffnung des Aufnahmeraums umgibt. Hierdurch wird es möglich, einen größeren, äußeren Bereich eines Koppelmediumskissens zwischen dem Aufnahmeraum des Transduceraufsetzkörpers bzw. der Austrittsöffnung und einer Oberfläche einer zu untersuchenden Probe mittels der teilringförmigen oder ringförmigen Absaugkammer von der Probenoberfläche auf effektive Weise zu entfernen.

Durch den erfindungsgemäßen Transduceraufsetzkörper ist es möglich, kontinuierlich einen Strom des Koppelmediums der Oberfläche aus dem Aufnahmeraum des Transduceraufsetzkörpers einer zu untersuchenden Probe zuzuführen und fortlaufend das Koppelmedium außerhalb der Untersuchungszone des Transducers zu entfernen. Dabei wird vorzugsweise ein luftblasenfreies oder gasbläschenfreies Kissen unter einer Linse des akustischen Transducers bereitgestellt.

Ferner zeichnet sich eine Ausgestaltung des Transduceraufsetzkörpers dadurch aus, dass die Absaugkammer fluidisch mit wenigstens einer Abführleitung zum Abführen des Koppelmediums aus der Absaugkammer verbunden ist. Über die Abführleitung wird ein Unterdruck an der Absaugkammer bereitgestellt, um das aus der Austrittsöffnung ausgetretene Koppelmedium aus der Untersuchungszone zu entfernen.

Vorzugsweise sind gemäß einer Weiterbildung zwei oder mehr Abführleitungen fluidisch mit der Absaugkammer verbunden, wobei die zwei oder mehr Abführleitungen fluidisch mit einer Gesamtabführleitung verbunden sind. Dabei ist vorgesehen, dass die an die Absaugkammer angeschlossenen Abführleitungen in eine Gesamtzuführleitung münden, um das abgesaugte Koppelmedium über die Gesamtabführleitung vom Prüfkopf wegzuführen.

Dabei ist bei einer weiteren Ausgestaltung vorgesehen, dass zwei Abführleitungen für die Absaugkammer vorgesehen sind, wobei die Absaugkammer zwei Absaugkammeröffnungen aufweist, wobei jede Absaugkammeröffnung mit jeweils einer Abführleitung verbunden ist, wobei insbesondere die Absaugkammeröffnungen einander gegenüberliegend angeordnet sind. Durch die Bereitstellung der zwei Abführleitungen an der Absaugkammer wird gleichzeitig an mehreren Stellen das Koppelmedium auf effiziente Weise vom Prüfkopf weggeführt.

Des Weiteren ist es bei einer Ausgestaltung des Transduceraufsetzkörpers vorteilhaft, dass im Inneren des Aufnahmeraums ein Gasbläschensammelbereich, insbesondere ein Luftbläschensammelbereich, für im Koppelmedium enthaltene Gasbläschen, insbesondere Luftbläschen, ausgebildet ist. Hierdurch wird die Qualität der Untersuchungen mittels des akustischen Mikroskops verbessert, da durch den Gasbläschensammelbereich die Gasbläschen nicht in eine Zone zwischen dem Transducer und der Oberfläche der zu untersuchenden Probe gelangen und dadurch nicht die Untersuchungen beeinflussen. Vorzugsweise werden mittels des Gasbläschensammelbereichs Luftblasen oder Gasbläschen innerhalb des Aufnahmebereichs aufgefangen und gesammelt, wodurch die Gasbläschen nicht durch die Austrittsöffnung des Aufnahmebereichs gefördert werden.

Dazu ist vorteilhafterweise gemäß einem weiteren Aspekt vorgesehen, dass der Gasbläschensammelbereich einen Sammelkanal aufweist, wobei insbesondere der Sammelkanal im Inneren des Aufnahmeraums wenigstens teilweise umlaufend und/oder wenigstens teilweise ringförmig oder ringförmig ausgebildet ist.

Vorzugsweise sind gemäß einer Weiterbildung der Gasbläschensammelbereich oder der Sammelkanal an der von der Austrittsöffnung des Aufnahmebereichs gegenüberliegenden Seite ausgebildet.

Außerdem ist es bei dem Transduceraufsetzkörper bevorzugt, dass der Gasbläschensammelbereich oder der Sammelkanal fluidisch mittels einer Bypassleitung mit der Abführleitung, insbesondere mit einer oder der Gesamtabführleitung, verbunden ist. Hierdurch wird ermöglicht, dass die im Gasbläschensammelbereich oder im Sammelkanal gesammelten Mikrobläschen aus dem Aufnahmebereich, vorzugsweise kontinuierlich, entfernt werden.

Ferner zeichnet sich eine Ausgestaltung des Transduceraufsetzkörpers dadurch aus, dass der Aufnahmeraum eine Einbringöffnung zum Einbringen eines Prüfkopfs in den Aufnahmeraum aufweist, wobei die Einbringöffnung gegenüber der Austrittsöffnung ausgebildet ist. Hierdurch ist es möglich, den Prüfkopf und den Transducer innerhalb des Aufnahmeraums des Transduceraufsetzkörpers anzuordnen. Dabei ist es ermöglicht, verschiedene Arbeitsabstände des Transducers zur Probe zu realisieren. Beispielsweise wird der Transduceraufsetzkörper entlang einer Mantelfläche des Prüfkopfs verschoben und entsprechend positioniert. Dabei ist es möglich, dass der Aufsetzkörper entsprechend an dem Prüfkopf fixiert wird.

Weiterhin ist bei einer vorteilhaften Weiterbildung des Transduceraufsetzkörpers vorgesehen, dass die Einbringöffnung mit einem Dichtungskörper, insbesondere Dichtungsring, ausgebildet ist und/oder dass die Einbringöffnung eine, vorzugsweise umlaufende, Ausnehmung für einen Dichtungskörper, insbesondere Dichtungsring, aufweist, wobei insbesondere der Dichtungskörper, insbesondere Dichtungsring, in der Ausnehmung angeordnet ist.

Weiterhin ist bei dem Transduceraufsetzkörper bevorzugt, dass im Inneren des Aufnahmeraums an der Innenwandung des Aufnahmeraums eine Rippenstruktur oder wenigstens ein Kanal oder eine Kanalstruktur ausgebildet ist. Bei Anordnung eines Prüfkopfs in dem Aufnahmeraum ist es möglich, durch die Rippenstruktur oder den wenigstens einen Kanal oder durch die Kanalstruktur, die zwischen der Innenwandung des Aufnahmeraums und der Mantelfläche, des vorzugsweise zylindrischen, Prüfkopfs ausgebildet ist, das fließende Koppelmedium von der Zuführleitung über den Aufnahmeraum zu der Austrittsöffnung des Aufnahmeraums geführt wird.

Vorzugsweise ist der Transduceraufsetzkörper als Adapter ausgebildet.

Ferner zeichnet sich der Transduceraufsetzkörper in einer Ausgestaltung dadurch aus, dass der Transduceraufsetzkörper aus Kunststoff hergestellt ist. Dabei wird vorzugsweise ein Kunststoff verwendet, der keine oder nur wenige Fremdatome in das Koppelmedium abgibt. Insbesondere werden als Kunststoffmaterialien eingesetzt, die auch für einen 3D-Druck geeignet sind. Außerdem wird bevorzugterweise auch ein formstabiler Kunststoff und/oder ein langzeitbeständiger Kunststoff eingesetzt.

Vorzugsweise ist gemäß einer Ausführungsform der Transduceraufsetzkörper mit einer, vorzugsweise drahtlos, auslesbaren Kennzeichnungseinrichtung, insbesondere ein RFID-Chip oder ein Barcode oder ein EEPROM, ausgebildet. Dadurch ist es möglich, ein eindeutig erkennbares, vorzugsweise automatisch, auswertbares Merkmal für den Transduceraufsetzkörper mittels einer entsprechenden Erkennungseinrichtung zu erkennen, wodurch die Handhabung des Transduceraufsetzkörpers verbessert wird.

Weiterhin zeichnet sich eine Ausgestaltung des Transduceraufsetzkörpers dadurch aus, dass die Zuführleitung für das Koppelmedium einen Anschlussverbindungskörper für eine Leitung aufweist und dass eine Abführleitung oder die Gesamtabführleitung für das Koppelmedium einen Anschlussverbindungskörper für eine Leitung aufweist, wobei der Anschlussverbindungskörper der Zuführleitung und der Anschlussverbindungskörper der Abführleitung oder der Gesamtabführleitung unterschiedlich ausgebildet sind. Beispielsweise weisen hierbei die Anschlussverbindungskörper der Zuführleitung sowie der Abführleitung oder der Gesamtabführleitung unterschiedliche Geometrien auf, wodurch die an die jeweiligen Anschlussverbindungskörper angeschlossenen Leitungen unverwechselbar mit den jeweiligen Anschlussverbindungskörpern verbunden werden.

Ferner wird die Aufgabe gelöst durch ein akustisches Mikroskop, insbesondere Ultraschallrastermikroskop, mit einem wenigstens einen Transducer und eine Linse aufweisenden Prüfkopf, wobei am Prüfkopf ein Transduceraufsetzkörper, wie voranstehend beschrieben, angeordnet ist. Zur Vermeidung von Wiederholungen wird auf die vorherigen Ausführungen ausdrücklich verwiesen.

Gemäß einer Weiterbildung des akustischen Mikroskops ist es vorteilhaft, dass die Zuführleitung mit einem Koppelmediumsvorrat für das flüssige Koppelmedium verbunden ist, wobei insbesondere in der Zuführleitung eine mit dem Koppelmediumsvorrat verbundene Pumpe vorgesehen ist, und/oder dass die Abführleitung, insbesondere die Gesamtabführleitung, mit einer Unterdruckquelle verbunden ist.

Darüber hinaus zeichnet sich eine Ausführungsform des akustischen Mikroskops dadurch aus, dass der Prüfkopf, vorzugweise ausschließlich, einen Transducer und eine Linse aufweist oder dass der Prüfkopf mehrere Transducer und mehrere Linsen für jeden Transducer aufweist. Im Rahmen der Erfindung weist der Prüfkopf, der in den Aufnahmeraum des Transduceraufsetzkörpers eingebracht und angeordnet wird oder ist, einen einzigen Transducer mit einer (einzigen) Linse zur Fokussierung der (Ultra-)Schallwellen auf. In einer alternativen Ausgestaltung ist der Prüfkopf mit einem, insbesondere Array oder mit einer Anordnung von mehreren Transducern und Linsen für die jeweiligen Transducern ausgebildet. Beispielsweise sind bei dem Array die Transducer in einer linearen Reihenfolge nebeneinander angeordnet. Es sind im Rahmen der Erfindung auch andere Anordnungen von Transducern und der Linsen hierfür für den Prüfkopf möglich und realisierbar.

Außerdem wird die Aufgabe gelöst durch eine Verwendung oder eine Anordnung eines Transduceraufsetzkörpers an einem Prüfkopf eines akustischen Mikroskops, insbesondere Ultraschallrastermikroskop, insbesondere wie voranstehend beschrieben, wobei der Transduceraufsetzkörper wie voranstehend beschrieben ausgebildet ist. Hierzu wird auf die voranstehenden Ausführungen ausdrücklich verwiesen.

Eine weitere Lösung der Aufgabe erfolgt durch ein Verfahren zum Betreiben eines akustischen Mikroskops, insbesondere Ultraschallrastermikroskop, wobei das akustische Mikroskop mit einem wenigstens einen Transducer und eine Linse aufweisenden Prüfkopf ausgebildet ist, und wobei ein erfindungsgemäßer Transduceraufsetzkörper, wie voranstehend beschrieben, angeordnet ist. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine perspektivische Ansicht eines Transduceraufsetzkörpers für einen Prüfkopf eines akustischen Mikroskops,
- Fig. 2: einen Querschnitt durch den Transduceraufsetzkörper mit einem darin angeordneten Prüfkopf eines akustischen Mikroskops und
- Fig. 3: schematisch eine Draufsicht auf den Transduceraufsetzkörper.

In den Zeichnungen sind jeweils gleiche oder gleichartige Elemente und/oder Teile mit denselben Bezugsziffern versehen, so dass von einer erneuten Vorstellung jeweils abgesehen wird.

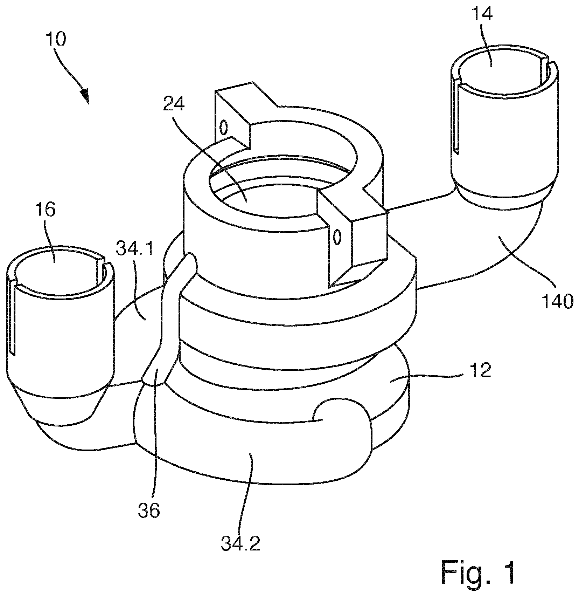

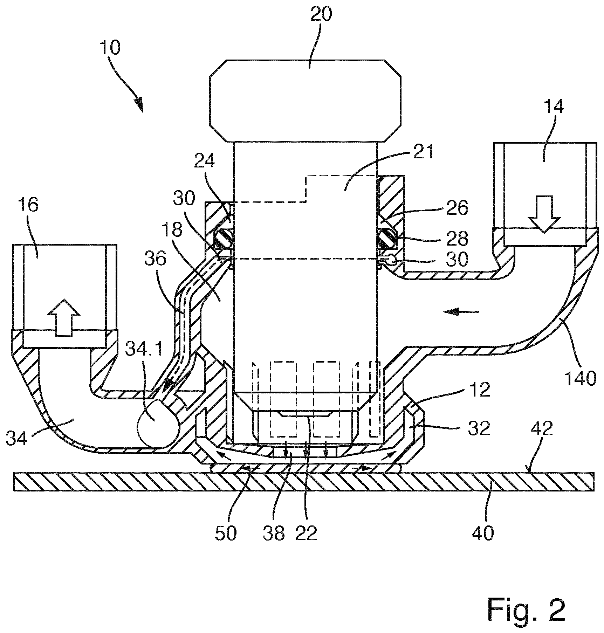

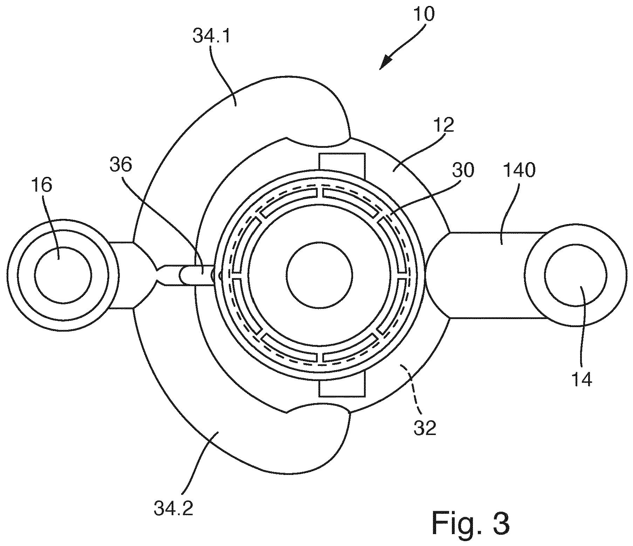

In Fig. 1 ist in einer schematischen Darstellung ein erfindungsgemäßer Transduceraufsetzkörper 10 gezeigt. Die Fig. 2 und 3 zeigen jeweils einen Querschnitt durch den Transduceraufsetzkörper 10 und eine Draufsicht auf den Transduceraufsetzkörper 10. Der Transduceraufsetzkörper 10 ist aus Kunststoff vorzugsweise einstückig hergestellt.

Der Transduceraufsetzkörper 10 weist einen Hauptkorpus 12 mit einem Aufnahmeraum 18 im Innern auf. Der Aufnahmeraum 18 ist fluidisch mit einer eine Zuführleitung 14 aufweisenden Zuführeinheit 140 zur Zuführung eines Koppelmediums, wie zum Beispiel Wasser, in den Aufnahmeraum 18 des Hauptkorpus 12 verbunden. Ferner weist der Körper eine Abführeinheit 16 auf, um das Koppelmedium aus einer Absaugkammer 32 des Korpus 12 abzuführen (vgl. Fig. 2).

Aus der Querschnittsansicht von Fig. 2 sind weitere Details des Transduceraufsetzkörpers 10 zu entnehmen. Der Hauptkorpus 12 weist im Inneren einen Aufnahmeraum 18 auf, der fluidisch mit der Zuführeinheit 140 verbunden ist. Die Zuführleitung 14 der Zuführeinheit 140 selbst ist mit einem Koppelmediumsvorrat (hier nicht dargestellt), um ein flüssiges Koppelmedium, wie zum Beispiel Wasser, in den Aufnahmeraum 18 zuzuführen.

Bei der Querschnittsdarstellung in Fig. 2 ist ein Prüfkopf 20 eines akustischen Mikroskops, insbesondere Ultraschallrastermikroskop, über eine Einbringöffnung 24 des Hauptkorpus 12 in den Aufnahmeraum 18 eingebracht. Der Prüfkopf 20 weist einen Schallwandler bzw. Transducer 21 zur Erzeugung von Schallwellen, wobei am vorderen Ende des Prüfkopfs 20 eine Linse 23 zur Fokussierung der Schallwellen angeordnet ist. Der Prüfkopf 20 mit dem Transducer 21 und der Linse 22 ist Bestandteil eines (hier nicht dargestellten) akustischen Rastermikroskops, insbesondere Ultraschallrastermikroskops.

Im oberen Bereich der Einbringöffnung 24 ist eine umlaufende Ausnehmung 26 ausgebildet, in der ein Dichtungsring 28 aufgenommen ist, um den Aufnahmeraum 18 gegenüber der Mantelfläche des Prüfkopfs 20 bei Anordnung des Prüfkopfs 20 im Aufnahmeraum 18 abzudichten.

Nach Einströmen des Koppelmediums über die Zuführeinheit 140 in den Aufnahmeraum 18 wird das Koppelmedium über Kanäle, die zwischen der äußeren Mantelfläche des Prüfkopfs und der Innenwandung des Aufnahmeraums ausgebildet sind, in Richtung einer, insbesondere unterseitigen und/oder kreisförmigen, Austrittsöffnung 38 des Aufnahmeraums 28 geleitet, so dass das Koppelmedium, insbesondere Wasser, durch die Austrittsöffnung 38 in Richtung einer Oberfläche 42 einer zu untersuchenden Probe 40 geleitet wird.

Durch die Beabstandung des Transduceraufsetzkörpers 10 zur untersuchenden Probe 40 wird zwischen der Austrittsöffnung 38 und der Oberfläche 42 der Probe 40 ein Koppelmediumskissen 50 ausgebildet, so dass bei Betrieb des Transducers 21 die Schallwellen gut an die zu untersuchende Probe 40 angekoppelt werden.

Seitlich ist die Austrittsöffnung 38 umgeben von einer Absaugkammer 32, so dass aus der Untersuchungszone zwischen dem Transducer 21 und der Oberfläche 42 der Probe 40 der äußere Bereich des Koppelmediumskissens 50 durch Anlegen eines Unterdrucks an die Absaugkammer 32 entfernt wird. Hierzu ist die Absaugkammer 32 über zwei gegenüberliegende Mündungen fluidisch mit zwei Abführleitungen 34.1, 34.2 verbunden (vgl. Fig. 3), die sich zu einer Gesamtabführleitung 34 verbinden, wobei bei Anlegen eines Unterdrucks an die Gesamtabführleitung 34 die fluidisch damit verbundenen Abführleitungen 34.1, 34.2 weiterhin fluidisch mit der Absaugkammer 32 verbunden sind. Die Absaugkammer 32 sowie die Abführleitungen 34.1, 34.2 und die Gesamtabführleitung 34 sind Bestandteil der Abführeinheit 15 zum Abführen des angesaugten oder abgesaugten Koppelmediums.

Ferner weist der Aufnahmeraum 18 im Bereich des Dichtungsrings 28 innerhalb des Aufnahmeraums 18 einen Sammelkanal 30 auf, um beispielsweise Luftbläschen, die im Koppelmedium als Mikrobläschen enthalten sind, zu sammeln. Der Sammelkanal 38 ist ferner über eine Bypassleitung 36 mit der Gesamtabführleitung 34 fluidisch verbunden, so dass bei Beaufschlagung von Unterdruck in der Gesamtabführleitung 34 die Luftbläschen oder Gasbläschen aus dem Sammelkanal 30 über die Bypassleitung 36 entfernt werden.

Alle genannten Merkmale, auch die den Zeichnungen allein zu entnehmenden sowie auch einzelne Merkmale, die in Kombination mit anderen Merkmalen offenbart sind, können allein oder in Kombination betrachtet werden. Die Reichweite wird durch die beifügten Ansprüche definiert.

### Bezugszeichenliste

- 10: Transduceraufsetzkörper
- 12: Hauptkorpus
- 14: Zuführeinheit
- 16: Abführeinheit
- 18: Aufnahmeraum
- 20: Prüfkopf
- 21: Transducer
- 21: Linse
- 24: Einbringöffnung
- 26: Ausnehmung
- 28: Dichtungsring
- 30: Sammelkanal
- 32: Absaugkammer
- 34: Gesamtabführleitung
- 34.1, 34.2: Abführleitung
- 36: Bypassleitung
- 38: Austrittsöffnung
- 40: Probe
- 42: Oberfläche
- 50: Koppelmediumskissen
- 140: Zuführeinheit

## Patentansprüche

1. Transduceraufsetzkörper (10) für einen wenigstens einen Transducer (21) und eine Linse (22) aufweisenden Prüfkopf (20) eines akustischen Mikroskops, insbesondere Ultraschallrastermikroskop, mit einem Aufnahmeraum (18) zum Aufnehmen des Prüfkopfs (20), wobei eine Zuführleitung (14) zum Zuführen eines flüssigen Koppelmediums, insbesondere Wasser, fluidisch mit dem Aufnahmeraum (18) verbunden ist, wobei der Aufnahmeraum (18) eine zu einer zu untersuchenden Probe (40) zugewandte Austrittsöffnung (38) zum Austritt des flüssigen Koppelmediums aus dem Aufnahmeraum (18) aufweist, **dadurch gekennzeichnet, dass** außerhalb des Aufnahmeraums (18) und seitlich an der Austrittsöffnung (38) des Aufnahmeraums (18) eine mit Unterdruck beaufschlagte oder beaufschlagbare Absaugkammer (32) zum Absaugen des aus der Austrittsöffnung (38) austretenden Koppelmediums vorgesehen ist.

2. Transduceraufsetzkörper (10) nach Anspruch 1, **dadurch gekennzeichnet, dass** die Absaugkammer (32) wenigstens teilringförmig oder ringförmig, vorzugsweise im Bereich der Austrittsseite des Aufnahmeraums (18), die Austrittsöffnung (38) umgibt.

3. Transduceraufsetzkörper (10) nach Anspruch 1 oder 2, **dadurch gekennzeichnet, dass** die Absaugkammer (32) fluidisch mit wenigstens einer Abführleitung (34, 34.1, 34.2) zum Abführen des Koppelmediums aus der Absaugkammer (32) verbunden ist.

4. Transduceraufsetzkörper (10) nach Anspruch 3, **dadurch gekennzeichnet, dass** zwei oder mehr Abführleitungen (34, 34.1, 34.2) fluidisch mit der Absaugkammer (32) verbunden sind, wobei die zwei oder mehr Abführleitungen (34.1, 34.2) fluidisch mit einer Gesamtabführleitung (34) verbunden sind, wobei insbesondere zwei Abführleitungen für die Absaugkammer (32) vorgesehen sind, wobei die Absaugkammer (32) zwei Absaugkammeröffnungen aufweist, wobei jede Absaugkammeröffnung mit jeweils einer Abführleitung (34, 34.1, 34.2) verbunden ist, wobei insbesondere die Absaugkammeröffnungen einander gegenüberliegend angeordnet sind.

5. Transduceraufsetzkörper (10) nach einem der Ansprüche 1 bis 4, **dadurch gekennzeichnet, dass** im Inneren des Aufnahmeraums (18) ein Gasbläschensammelbereich (28), insbesondere ein Luftbläschensammelbereich für im Koppelmedium enthaltene Gasbläschen, insbesondere Luftbläschen, ausgebildet ist.

6. Transduceraufsetzkörper (10) nach Anspruch 5, **dadurch gekennzeichnet, dass** der Gasbläschensammelbereich (28) einen Sammelkanal aufweist, wobei insbesondere der Sammelkanal im Inneren des Aufnahmeraums (18) wenigstens teilweise umlaufend und/oder wenigstens teilweise ringförmig oder ringförmig ausgebildet ist.

7. Transduceraufsetzkörper (10) nach Anspruch 5 oder 6, **dadurch gekennzeichnet, dass** der Gasbläschensammelbereich (28) oder der Sammelkanal an der von der Austrittsöffnung (38) des Aufnahmebereichs gegenüberliegenden Seite ausgebildet sind
und/oder dass der Gasbläschensammelbereich (28) oder der Sammelkanal fluidisch mittels einer Bypassleitung mit einer Abführleitung (34, 34.1, 34.2), insbesondere mit einer oder der Gesamtabführleitung (34, 34.1, 34.2), verbunden ist.

8. Transduceraufsetzkörper (10) nach einem der Ansprüche 1 bis 7, **dadurch gekennzeichnet, dass** der Aufnahmeraum (18) eine Einbringöffnung zum Einbringen des Prüfkopfs (20) in den Aufnahmeraum (18) aufweist, wobei die Einbringöffnung gegenüber der Austrittsöffnung (38) ausgebildet ist, wobei insbesondere die Einbringöffnung mit einem Dichtungskörper, insbesondere Dichtungsring, ausgebildet ist und/oder dass die Einbringöffnung eine, vorzugsweise umlaufende, Ausnehmung für einen Dichtungskörper, insbesondere Dichtungsring, aufweist, wobei insbesondere der Dichtungskörper, insbesondere Dichtungsring, in der Ausnehmung angeordnet ist.

9. Transduceraufsetzkörper (10) nach einem der Ansprüche 1 bis 8, **dadurch gekennzeichnet, dass** im Inneren des Aufnahmeraums (18) an der Innenwandung des Aufnahmeraums (18) eine Rippenstruktur oder wenigstens ein Kanal oder eine Kanalstruktur ausgebildet ist,
und/oder dass der Transduceraufsetzkörper (10) als Adapter ausgebildet ist
und/oder dass der Transduceraufsetzkörper (10) aus Kunststoff hergestellt ist
und/oder dass der Transduceraufsetzkörper (10) mit einer, vorzugsweise drahtlos, auslesbaren Kennzeichnungseinrichtung, insbesondere ein RFID-Chip oder ein Barcode oder ein EEPROM, ausgebildet ist.

10. Transduceraufsetzkörper (10) nach einem der Ansprüche 1 bis 9, **dadurch gekennzeichnet, dass** die Zuführleitung (14) für das Koppelmedium einen Anschlussverbindungskörper für eine Leitung aufweist und dass eine Abführleitung (34, 34.1, 34.2) oder die Gesamtabführleitung (34, 34.1, 34.2) für das Koppelmedium einen Anschlussverbindungskörper für eine Leitung aufweist, wobei der Anschlussverbindungskörper der Zuführleitung (14) und der Anschlussverbindungskörper der Abführleitung (34, 34.1, 34.2) oder der Gesamtabführleitung (34, 34.1, 34.2) unterschiedlich ausgebildet sind.

11. Akustisches Mikroskop, insbesondere Ultraschallrastermikroskop, mit einem wenigstens einen Transducer (21) und eine Linse (22) aufweisenden Prüfkopf (20), wobei am Prüfkopf (20) ein Transduceraufsetzkörper (10) nach einem der Ansprüche 1 bis 10 angeordnet ist.

12. Akustisches Mikroskop nach Anspruch 11, **dadurch gekennzeichnet, dass** die Zuführleitung (14) mit einem Koppelmediumsvorrat für das flüssige Koppelmedium verbunden ist, wobei insbesondere in der Zuführleitung (14) eine mit dem Koppelmediumsvorrat verbundene Pumpe vorgesehen ist, und/oder dass die Abführleitung (34, 34.1, 34.2), insbesondere die Gesamtabführleitung (34, 34.1, 34.2), mit einer Unterdruckquelle verbunden ist.

13. Akustisches Mikroskop nach Anspruch 11 oder 12, **dadurch gekennzeichnet, dass** der Prüfkopf (20), vorzugweise ausschließlich, einen Transducer (21) und eine Linse (22) aufweist oder dass der Prüfkopf (20) mehrere Transducer (21) und mehrere Linsen (22) für jeden Transducer (21) aufweist.

14. Verwendung oder Anordnung eines Transduceraufsetzkörpers (10) an einem Prüfkopf (20) eines akustischen Mikroskops, insbesondere Ultraschallrastermikroskop, insbesondere nach einem der Ansprüche 11 bis 13, wobei der Transduceraufsetzkörper (10) nach einem der Ansprüche 1 bis 10 ausgebildet ist.

15. Verfahren zum Betreiben eines akustischen Mikroskops, insbesondere Ultraschallrastermikroskop, wobei das akustische Mikroskop mit einem wenigstens einen Transducer (21) und eine Linse (22) aufweisenden Prüfkopf (20) ausgebildet ist, wobei am Prüfkopf (20) ein Transduceraufsetzkörper (10) nach einem der Ansprüche 1 bis 10 angeordnet ist.

## Claims

1. A transducer attachment body (10) for a probe (20), having at least one transducer (21) and one lens (22), of an acoustic microscope, in particular an ultrasound scanning microscope, having a receiving space (18) for receiving the probe (20), wherein a supply line (14) for supplying a liquid coupling medium, in particular water, is fluidically connected with the receiving space (18), wherein the receiving space (18) comprises an outlet opening (38) facing a sample (40) to be examined for the discharge of the liquid coupling medium from the receiving space (18), **characterized in that** a suction chamber (32), which is or can be applied with negative pressure, is provided outside of the receiving space (18) and laterally at the outlet opening (38) of the receiving space, for suction of the coupling medium escaping from the outlet opening (38).

2. The transducer attachment body (10) according to claim 1, **characterized in that** the suction chamber (32) surrounds the outlet opening (38) at least partially annularly or annularly, preferably in the region of the outlet side of the receiving space (18).

3. The transducer attachment body (10) according to claim 1 or 2, **characterized in that** the suction chamber (32) is fluidically connected with at least one discharge line (34, 34.1, 34.2) for discharging the coupling medium from the suction chamber (32).

4. The transducer attachment body (10) according to claim 3, **characterized in that** two or more discharge lines (34, 34.1, 34.2) are fluidically connected with the suction chamber (32), wherein the two or more discharge lines (34.1, 34.2) are fluidically connected with a global discharge line (34), wherein in particular two discharge lines are provided for the suction chamber (32), wherein the suction chamber (32) comprises two suction chamber openings, wherein each suction chamber opening is connected with a respective discharge line (34, 34.1, 34.2), wherein in particular the suction chamber openings are arranged opposite to each other.

5. The transducer attachment body (10) according to any one of claims 1 to 4, **characterized in that** in the inside of the receiving space (18) is formed a gas bubble collection region (28), in particular an air bubble collection region, for gas bubbles, in particular air bubbles, contained in the coupling medium.

6. The transducer attachment body (10) according to claim 5, **characterized in that** the gas bubble collection region (28) comprises a collection channel, wherein in particular the collection channel is formed to be at least partially circumferential and/or at least partially annular or annular in the inside of the receiving space (18).

7. The transducer attachment body (10) according to claim 5 or 6, **characterized in that** the gas bubble collection region (28) or the collection channel is formed on the opposite side of the outlet opening (38) of the receiving region
and/or that the gas bubble collection region (28) or the collection channel is fluidically connected with a discharge line (34, 34.1, 34.2), in particular with a or said global discharge line (34, 34.1, 34.2), by means of a bypass line.

8. The transducer attachment body (10) according to any one of claims 1 to 7, **characterized in that** the receiving space (18) comprises an introduction opening for introducing a probe (20) into the receiving space (18), the introduction opening being formed opposite to the outlet opening (38), wherein in particular the introduction opening is formed with a sealing body, in particular a sealing ring, and/or that the introduction opening comprises a preferably circumferential recess for a sealing body, in particular sealing ring, wherein in particular the sealing body, in particular sealing ring, is arranged in the recess.

9. The transducer attachment body (10) according to any one of claims 1 to 8, **characterized in that** a rib structure or at least a channel or a channel structure is formed in the inside of the receiving space (18) on the inner wall of the receiving space (18)
and/or that the transducer attachment body (10) is formed as an adapter
and/or that the transducer attachment body (10) is made of plastic
and/or that the transducer attachment body (10) is formed with a preferably wirelessly readable identification device, in particular an RFID chip or a barcode or an EEPROM.

10. The transducer attachment body (10) according to any one of claims 1 to 9, **characterized in that** the supply line (14) for the coupling medium comprises a connector linking body for a line, and **in that** a discharge line (34, 34.1, 34.2) or the global discharge line (34, 34.1, 34.2) for the coupling medium comprises a connector linking body for a line, wherein the connector linking body of the supply line and the connector linking body of the discharge line (34, 34.1, 34.2) or the global discharge line (34, 34.1, 34.2) are formed differently.

11. An acoustic microscope, in particular an ultrasonic scanning microscope, having a probe (20) with at least one transducer (21) and one lens (22), wherein a transducer attachment body (10) according to any one of claims 1 to 10 is arranged on the probe (20).

12. The acoustic microscope according to claim 11, **characterized in that** the supply line (14) is connected with a coupling medium reservoir for the liquid coupling medium, wherein, in particular, a pump connected to the coupling medium reservoir is provided in the supply line (14), and/or **in that** the discharge line (34, 34.1, 34.2), in particular the global discharge line (34, 34.1, 34.2), is connected to a negative pressure source.

13. The acoustic microscope according to claim 11 or 12, **characterized in that** the probe (20) comprises, preferably exclusively, one transducer (21) and one lens (22), or **in that** the probe (20) comprises several transducers (21) and several lenses (21) for each transducer (21).

14. Use or arrangement of a transducer attachment body (10) on a probe (20) of an acoustic microscope, in particular an ultrasonic scanning microscope, in particular according to any one of claims 11 to 13, wherein the transducer attachment body (10) is formed according to any one of claims 1 to 10.

15. A method for operating an acoustic microscope, in particular an ultrasonic scanning microscope, wherein the acoustic microscope is formed with a probe (20) having at least one transducer (21) and one lens (22), wherein a transducer attachment body (10) according to any one of claims 1 to 10 is arranged on the probe (20).

## Revendications

1. Corps (10) de fixation de transducteur pour une tête de mesure (20) comprenant un transducteur (21) et une lentille (22) d'un microscope acoustique, en particulier d'un microscope à balayage à ultrasons, présentant une chambre de réception (18) pour recevoir la tête de mesure (20), une conduite d'alimentation (14) pour l'alimentation d'un milieu de liaison liquide, en particulier de l'eau, étant reliée fluidiquement à la chambre de réception (18), la chambre de réception (18) comprenant une ouverture de sortie (38) tournée vers un échantillon à examiner (40) pour la sortie du milieu de liaison liquide hors de la chambre de réception (18), **caractérisé en ce qu'**à l'extérieur de la chambre de réception (18) et latéralement à l'ouverture de sortie (38) de la chambre de réception (18) est prévue une chambre d'aspiration (32) soumise ou apte à être soumise à une dépression pour aspirer le milieu de liaison sortant de l'ouverture de sortie (38).

2. Corps (10) de fixation de transducteur selon la revendication 1, **caractérisé en ce que** la chambre d'aspiration (32) entoure l'ouverture de sortie (38) au moins en partie, de manière annulaire ou en forme d'anneau, de préférence dans la zone du côté sortie de la chambre de réception (18).

3. Corps (10) de fixation de transducteur selon la revendication 1 ou 2, **caractérisé en ce que** la chambre d'aspiration (32) est reliée fluidiquement à au moins une conduite d'évacuation (34, 34.1, 34.2) pour évacuer le milieu de liaison hors de la chambre d'aspiration (32).

4. Corps (10) de fixation de transducteur selon la revendication 3, **caractérisé en ce que** deux conduites d'évacuation (34, 34.1, 34.2), ou plus de deux de ces conduites, sont reliées fluidiquement à la chambre d'aspiration (32), les deux, ou plus de deux, conduites d'évacuation (34.1, 34.2) étant reliées fluidiquement à une conduite d'évacuation globale (34), deux conduites d'évacuation étant notamment prévues pour la chambre d'aspiration (32), la chambre d'aspiration (32) comprenant deux ouvertures de chambre d'aspiration, chaque ouverture de chambre d'aspiration étant reliée à une conduite d'évacuation respective (34, 34.1, 34.2), les ouvertures de chambre d'aspiration étant notamment agencées en vis-à-vis.

5. Corps (10) de fixation de transducteur selon l'une des revendications 1 à 4, **caractérisé en ce qu'**à l'intérieur de la chambre de réception (18) est formée une zone (28) de collecte de bulles de gaz, en particulier une zone de collecte de bulles d'air, pour les bulles de gaz contenues dans le milieu de liaison, en particulier les bulles d'air.

6. Corps de transducteur (10) selon la revendication 5, **caractérisé en ce que** la zone (28) de collecte de bulles de gaz comprend un canal de collecte, le canal de collecte étant notamment aménagé à l'intérieur de la chambre de réception (18), en étant au moins partiellement périphérique et/ou au moins partiellement annulaire ou en forme d'anneau.

7. Corps (10) de fixation de transducteur selon la revendication 5 ou 6, **caractérisé en ce que** la zone (28) de collecte de bulles de gaz ou le canal de collecte est formé(e) sur le côté opposé à l'ouverture de sortie (38) de la zone de réception
et/ou **en ce que** la zone (28) de collecte de bulles de gaz ou le canal de collecte est relié fluidiquement, au moyen d'une conduite de dérivation, à une conduite d'évacuation (34, 34.1, 34.2), en particulier à une conduite d'évacuation globale (34, 34.1, 34.2) ou à la conduite d'évacuation globale.

8. Corps (10) de fixation de transducteur selon l'une des revendications 1 à 7, **caractérisé en ce que** la chambre de réception (18) comprend une ouverture d'introduction pour introduire la tête de mesure (20) dans la chambre de réception (18), l'ouverture d'introduction étant formée en face de l'ouverture de sortie (38), l'ouverture d'introduction étant notamment pourvue d'un corps d'étanchéité, en particulier une bague d'étanchéité, et/ou **en ce que** l'ouverture d'introduction présente un évidement, de préférence périphérique, pour un corps d'étanchéité, en particulier une bague d'étanchéité, le corps d'étanchéité, en particulier la bague d'étanchéité, étant agencé dans l'évidement.

9. Corps (10) de fixation de transducteur selon l'une des revendications 1 à 8, **caractérisé en ce qu'**à l'intérieur de la chambre de réception (18), sur la paroi intérieure de la chambre de réception (18), est formée une structure nervurée ou ledit canal ou une structure de canal,
et/ou **en ce que** le corps (10) de fixation de transducteur est réalisé sous forme d'adaptateur
et/ou **en ce que** le corps de fixation du transducteur (10) est fabriqué en matière plastique
et/ou **en ce que** le corps de fixation du transducteur (10) est muni d'un dispositif d'identification lisible, de préférence sans fil, en particulier une puce RFID ou un code-barres ou une EEPROM.

10. Corps de transducteur (10) selon l'une des revendications 1 à 9, **caractérisé en ce que** la conduite d'alimentation (14) pour le milieu de liaison comprend un corps de raccordement pour une conduite et qu'une conduite d'évacuation (34, 34.1, 34.2) ou la conduite d'évacuation globale (34, 34.1, 34.2) pour le milieu de liaison comprend un corps de raccordement pour une conduite, l'élément de raccordement de la conduite d'alimentation (14) et l'élément de raccordement de la conduite d'évacuation (34, 34.1, 34.2) ou de la conduite d'évacuation globale (34, 34.1, 34.2) étant réalisés différemment.

11. Microscope acoustique, en particulier microscope à balayage à ultrasons, comprenant une tête de mesure (20) comprenant un transducteur (21) et une lentille (22), dans lequel un corps (10) de fixation de transducteur selon l'une des revendications 1 à 10 est agencé sur la tête de mesure (20).

12. Microscope acoustique selon la revendication 11, **caractérisé en ce que** la conduite d'alimentation (14) est reliée à une réserve de milieu de liaison pour le milieu de liaison liquide, une pompe reliée à la réserve de milieu de liaison étant prévue en particulier dans la conduite d'alimentation (14), et/ou **en ce que** la conduite d'évacuation (34, 34.1, 34.2), en particulier la conduite d'évacuation globale (34, 34.1, 34.2), est reliée à une source de pression négative.

13. Microscope acoustique selon la revendication 11 ou 12, **caractérisé en ce que** la tête de mesure (20) comprend, de préférence exclusivement, un transducteur (21) et une lentille (22) ou **en ce que** la tête de mesure (20) comprend plusieurs transducteurs (21) et plusieurs lentilles (22) pour chaque transducteur (21).

14. Utilisation ou agencement d'un corps (10) de fixation de transducteur sur une tête de mesure (20) d'un microscope acoustique, en particulier d'un microscope à balayage à ultrasons, en particulier selon l'une des revendications 11 à 13, le corps (10) de fixation de transducteur étant réalisé selon l'une des revendications 1 à 10.

15. Procédé pour faire fonctionner un microscope acoustique, en particulier un microscope à balayage à ultrasons, le microscope acoustique étant conçu avec une tête de mesure (20) comprenant un transducteur (21) et une lentille (22), un corps (10) de fixation de transducteur selon l'une des revendications 1 à 10 étant agencé sur la tête de mesure (20).
